**Europäisches Patentamt**

**European Patent Office**

**Office européen des brevets**

(19)

(11) Publication number: **0 046 722**

**A2**

(12) # EUROPEAN PATENT APPLICATION

(21) Application number: **81630047.9**

(22) Date of filing: **03.08.81**

(51) Int. Cl.³: **H 02 P 8/00**

(30) Priority: **25.08.80 US 181441**

(43) Date of publication of application:
**03.03.82 Bulletin 82/9**

(84) Designated Contracting States:
**DE FR GB IT**

(71) Applicant: **UNITED TECHNOLOGIES CORPORATION**
**1, Financial Plaza**
**Hartford, CT 06101(US)**

(72) Inventor: **Martin, Anthony Newman**
**11 Wyngate**
**Simsbury, CT 06070(US)**

(74) Representative: **Waxweiler, Jean et al,**
**OFFICE DENNEMEYER S.à.r.l. 21-25 Allée Scheffer**
**P.O.Box 41**
**Luxembourg(LU)**

(54) **Stepper motor motion sensor.**

(57) The response of a stepper motor to the energizing of the motor's stator windings by excitation signals presented in each motor step interval, is detected by measuring the amplitude of the voltage signal induced in a non-energized stator winding as a result of the presentation of the excitation signals to the energized stator windings.

*FIG.1*

EP 0 046 722 A2

Croydon Printing Company Ltd.

## Description

## Stepper Motor Motion Sensor

### Technical Field

This invention relates to electrically controlled rotary positioning systems, and more particularly to stepper motor servo loops.

### Background Art

The use of stepper motor servo loops to control the position of rotary, mechanical devices is well known. One example is the position control of rotary fuel valves on a jet engine to regulate speed. In this application the stepper motor functions within an outer control loop, which is closed around the regulated parameter, i.e. speed. The stepper motor itself may be operating in, and with a position servo loop closed around the controlled fuel valve or, alternatively, may be operated open loop with control of the motor dependent only on the outer loop parameters.

Open loop control is sometimes necessary where the servo controlled device is located in a hostile environment, e.g. jet engine environment, since the environment places stringent survival and accuracy demands on the position sensing apparatus. To accommodate the accuracy requirements special signal conditioning circuitry may be required, such as that disclosed by me in U.S. patent 4,187,455 issued on February 5, 1980, where the actual sensed position signal is combined with the stepper motor excitation signals, which together provide a high accuracy feedback position signal value. A further alternative either closed or open loop operation is that of tracking control, in which the excitation signals to the motor are registered and

integrated to provide a simulated feedback signal.

In either closed or open loop operation it is desirable, if not imperative, to detect a failed or non-responsive stepper motor immediately, so as to allow for remedial action as quickly as possible. This is especially true in engine control systems. In the closed loop systems having actual sensed position feedback the failure may be detected in a reasonably short time by the non-response of the position feedback signal. This is not immediate, but requires some number of samples before the failure is verified. The problem is magnified in tracking control or open loop control systems since the parent control system has no direct knowledge of the motor failure, but only indirect knowledge in that the outer loop is not satisfied. Although this indication is sufficient to put the control system off line, the notice comes after the fact since the indication is the lack of control. These dealys in recognizing the existence of the failure, added to the subsequent response time required for corrective action, may result in a significant no control time interval. This could cause undesirable, if not dangerous excursions in the controlled parameter. If the parameter is engine speed, the result could be damage to the engine.

Disclosure of Invention

An object of the present invention is to provide method and apparatus for detecting, in both closed and open loop stepper motor servos, the actual movement of the stepper motor rotor in response to the energizing of the motor stator windings by excitation signals presented in each step interval of the motor.

According to the present invention, the excitation signals are monitored to identify in each present step interval, a set of active windings representative of those stator windings which are to be energized in the present step interval together with those which were energized in the immediately preceding step interval, and a set of inactive windings representative of those stator windings which are not energized in either interval, at least one of the inactive windings being monitored in each present step interval to detect the presence of a defined amplitude value of the voltage signal induced therein by excitation of the active windings, the presence of the defined amplitude value providing a manifestation of the actual rotation of the rotor. In further accord with the present invention, the presence of the defined amplitude value is monitored at a selected one of the inactive windings at the beginning of each present step interval, to detect, alternately, an actual amplitude value below or above the defined amplitude value to determine, respectively, the actual rotation or non-rotation of the stepper motor rotor in that step interval.

The stepper motor motion sensor of the present invention detects actual rotation of the stepper motor rotor independently of the presence of a position feedback signal from the device controlled by the motor. The motion sensing is simultaneous with the energizing of the motor stator windings, and provides an instant, sub-step interval indication of performance or failure. This allows the most immediate indication of failure possible, and permits corrective action by the motor's parent control system before the motor failure causes subsequent failure in the controlled parameter. The motion sensor is used in an intra-servo drive manner, dependent only on the command and actual excitation signals presented to the stator windings. As such the motion sensor may be embodied within the servo drive system itself, either as a discrete hardware and-on, or as part of the control system software.

These and other objects, features and advantages of the present invention will become more apparent in light of the following detailed description of a best mode embodiment thereof, as illustrated in the accompanying drawing.

Brief Description of Drawing(s)

Fig. 1 is a system block diagram illustration of one embodiment of a stepper motor motion sensor according to the present invention, as used in an open loop stepper motor servo drive for an electronic engine control (EEC);

Fig. 2 is an illustration of a function table used in the description of operation of the motion sensor of Fig. 1;

Fig. 3 is an illustration of various operating waveforms used in the description of operation of the motion sensor of Fig. 1; and

Fig. 4 is a flow chart diagram illustrating the function of the stepper motor motion sensor according to the present invention, as may be used in an alternative embodiment of the invention in an electronic signal processor.

Best Mode for Carrying Out the Invention

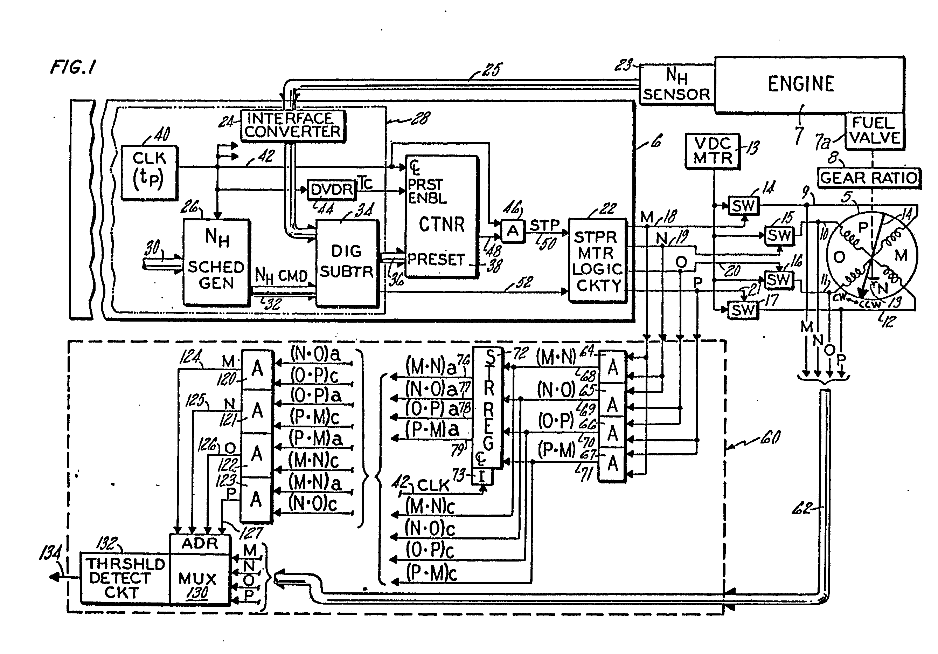

In Fig. 1 an engine control loop is illustrated in which a stepper motor 5, under control of an electronic engine control (EEC) 6, modulates the position of the fuel valve 7a of a gas turbine engine 7. The motor drives the valve through a gear ratio 8 selected to provide suitable scaling of stepper motor revolutions to valve revolution, however, the motor drive is open loop, i.e. there is no valve position feed back signal. The stepper motor illustrated in Fig. 1 is four phase, with stator windings M, N, O, P each connected by lines 9-12 to a DC voltage excitation source 13 through an associated one of the gated switches 14-17. The switches are controlled in the ON-OFF state by gate signals provided on lines 18-21 from stepper motor logic circuitry 22 included in the EEC.

Only a portion of the EEC is shown in Fig. 1; that portion directly related to the use of the stepper motor in controlling the selected engine parameter, here illustrated as the high turbine speed ($N_H$). As known, the $N_H$ set point value is dependent on a number of variables including the power lever (PLA) setting and the instantaneous values of other engine parameters, such as fan speed ($N_F$), low turbine speed ($N_L$) etc. All of these parameters determine or affect the actual control value for $N_H$. The portion of the EEC illustrated receives the set point control information and converts it to a speed command signal which in turn drives the motor. The motor responds by positioning the valve to meter the fuel in the manner required to satisfy the speed control loop. All of this is known in the art and forms no part of the present invention, which is to a stepper motor motion sensor for detecting motor rotation in response to stator winding excitation. The source, or control of the excitation is immaterial since the present invention is not application limited and may be used with any stepper motor servo system. As such the control loop of Fig. 1 is only illustrative, and the brief description of the EEC hereinafter is only for completeness.

Briefly, a sensor 23 provides an actual $N_H$ speed signal through lines 25 to an interface converter 24 within the EEC; the interface converts the sensed analog signal to an equivalent magnitude digital signal. An $N_H$ schedule generator 26, such as a PROM included within the EEC signal processor 28, provides the commanded speed value ($N_H$ CMD) in dependence on the set point control signal value presented by the EEC on lines 30 to the schedule generator. The $N_H$ CMD signal is presented through lines 32 to a digital subtractor 34 which also receives the actual speed signal from the converter 24 at a second input, and provides an error signal equal to the difference magnitude on lines 36 to a counter 38. The error signal is representative of the difference speed (ΔRPM) between commanded and actual and is scaled in terms of steps (fuel value degrees rotation) per RPM, such that its magnitude is indicative of the number of steps (change in fuel flow) required to reduce the speed error to zero. The counter 38 also receives an EEC time base signal from a clock 40 on lines 42, and a cycle time interval (Tc) signal provided as a sub-multiple of the clock signal from a divider 44. An AND gate 46 receives both the counter output on a line 48 and the clock signal on lines 42.

In the operation of the counter, the count value equivalent of the error signal magnitude on the lines 36 is registered in the presence of a preset enable provided by the cycle time interval signal. The counter, in effect, counts down the error count value in successive clock periods (tp) during the presence of the cycle time interval signal, the counter providing a logic one discrete on the line 48 to the AND gate during the countdown sequence. This enables the AND gate which transmits the line clock signal pulses to the stepper motor circuitry 22 through a line 50. When the count is interrupted, due to either completion of the error countdown or termination of the cycle time interval, the discrete on line 48 is reset to a logic zero, disabling the AND gate.

Each count, which corresponds to each clock signal pulse output from the AND gate, is equal to one step command for the motor. The cycle time interval, which is the update frequency of the processor, establishes the maximum number of motor steps in each interval and the stepper motor circuitry, which is well known, implements the actual rotation of the motor by energizing the appropriate stator windings on each step command. The windings energized for a present step command depends on: (1) the commanded direction of motor rotation which is determined by the polarity of the line 36 error signal as indicated by a sign bit provided by the subtractor 34 on a line 52 to the stepper motor logic circuitry, and (2) the windings energized in the immediately proceding step interval. The information is registered in a plurality of storage latches, or flip-flops comprising the logic circuitry. The selected stator windings are then energized by providing gate signals, which for the four phase motor shown requires gates on two of the four output lines 18-21, to the related switches 14-17. The switches connect the DC drive signal from the source 13 to the particular stator windings (M-P) associated with the energized switches.

The four phase stepper motor requires energizing of two adjacent stator windings in each step interval. If windings M and N are currently energized and the stepper motor logic circuitry determines that the motor must be stepped clockwise, winding M is de-energized simultaneous with the energizing of windings N, O in the next step interval. This continues in a clockwise direction with each succeeding winding being energized concurrently with its immediately preceding winding, i.e. N, O to O, P to P, M etc. Similarly, for a negative sign bit the motor is rotated counter-clockwise. If winding M, N are presently energized then N is de-energized simultaneous with the energizing of windings PM in the next succeeding step interval. The rotation continues until the error difference magnitude is reduced to zero, or the maximum number of steps for the cycle time interval has occurred. The logic circuitry records the state of each presently activated pair of windings, such that it knows in which direction and from which presently activated pair of windings the stepper motor must be advanced. All of which is well known in the art.

In Fig. 1 the stepper motor motion sensor 60 is connected to the motor control lines (18-21) and through trunk line 62 to each of the stator windings (M-P) excitation lines 9-12. Each of the lines 18-21, which carry the gate signals representative of the command excitation signals for the motor, are presented to the inputs of an associated two of four AND gates 64-67 within the motion sensor. These AND gates provide the four ANDED combinations: (M·N), (N·O), (O·P), and (P·M) on lines 68-71. Each ANDED combination is represented by a discrete signal on one of the four lines indicative of the two adjacent ones of the four stator windings presently energized by the stepper motor logic circuitry 22. These discretes are presented to a storage register 72, of a known type which strobes and latches the input discrete data to the output of the register on lines 76-79 in response to the rising edge of a clock signal provided by INVERT gate 73 from the EEC clock signal on the lines 42. This allows the ANDED discrete signal data on the lines 68-71 to be strobed through the register 72 during the middle of each step interval, such that in the first half of each present step interval the data on lines 76-79 identifies the stator winding pair which was present in the immediately preceding step interval. This data is present at the output of the register prior to the appearance of the gate signals for the next succeeding step interval, and represents the "actual" or presently energized stator windings. With presentation of the next pair of gate signals on the lines 18-21 the output of the AND gates on lines 68-71, provide the indication of the next, or "commanded" pair of windings to be energized, so that both actual and commanded, or preceding and present step interval stator winding excitation signal information is present simultaneously at the beginning of each present step interval.

The excitation voltage signals applied to the selected stator windings by the switches is in the nature of a step, which produces a step change in winding current. This change in winding current, which is rate limited by the $\frac{L}{R}$ time constant of the motor, produces a magnetic flux field ($\phi$) in the windings. The energy associated with this field is dissipated, in part, in providing the actual rotation of the rotor; the remaining field energy is dissipated in the windings through mutual induction. This results in an induced current, or voltage signal in each of the non-energized windings, which produces a measurable voltage pulse with a pulse width coextensive with the step setting time, i.e. the motor $\frac{L}{R}$ time constant.

Since the magnetic field energy dissipated in the windings is the residual field energy remaining after that expended in moving the rotor, the amplitude value of the induced current (voltage) is dependent on a number of factors. These include the motor size, number of windings, excitation voltage magnitude etc., such that the actual value measurement may be imprecise. As a relative amplitude measurement, however, the induced voltage signal provides a quantitative indication of rotor movement. In the event of failure of the rotor to move in response to the windings excitation the amount of energy dissipated in the windings is increased by that amount normally expended in moving the rotor. This increase is significant, such that the relative amplitude differences are easily defined and detected.

The magnetic flux field is generated with the stepped excitation of the windings, and occurs during the transition between adjacent step intervals, i.e. the de-energizing of one pair of windings and the energizing of the succeeding pair of windings. As described before this involves de-energizing one winding simultaneous with energizing another one winding, with the winding common to both adjacent intervals remaining energized. Of course the de-energized winding current decay time is finite, and is essentially concurrent with the presence of the magnetic field. As such, measurement of the induced voltage signal amplitude in a winding which is de-energized between adjacent intervals is impractical due to the overlapping of the decay and induced currents. Therefore, it is preferred to monitor those windings which are de-energized in each of the two adjacent intervals, i.e. both the present and immediately preceding step intervals.

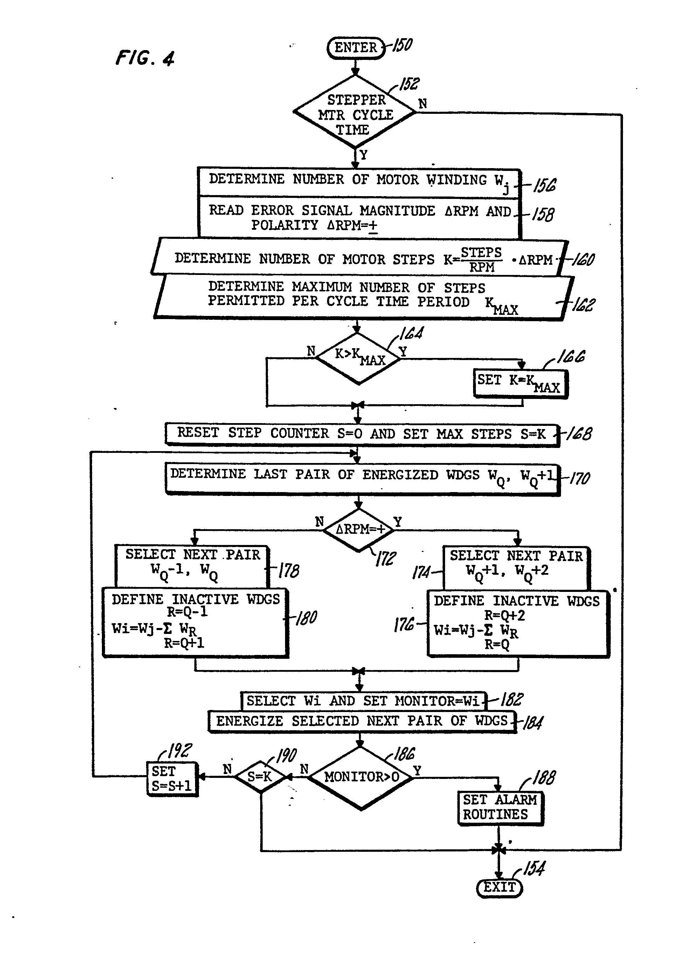

The induced signal waveform is defined by the impedance and $\frac{L}{R}$ characteristics of the motor. In Fig. 3, illustrations (a) - (d) depict various stator winding voltage signal waveforms in the transition period between adjacent step intervals 82-83, 92-93, and 100-101. These waveforms are illustrative of typical motor response characteristics and are intended only for the purpose of teaching the principles involved in this present invention. In illustrations (a) - (d), for adjacent step intervals 82, 83 it is assumed that in the preceding step interval 82 windings M, N are energized and windings O, P are de-energized, as illustrated by waveforms 84-86 and 88. This results in a discrete logic one at the output of register 72 on the line 76 (Fig. 1). In the present step interval 83 the windings N, O are energized and windings M, P are de-energized resulting in a discrete logic one on lines 69 at the output of the AND gate 65. The magnetic field created by excitation of windings N, O induces a voltage signal in both non-energized windings M, P, however, due to the decay of the prior excitation current in winding M which conflicts with the induced voltage signal, only the winding P signal is illustrated by the waveform 88 in illustration (d). In the case of a normal motor response, i.e. for actual rotation of the rotor 14, the induced signal has an amplitude which is a function of the excitation voltage signal value. The same induced voltage appears at a higher amplitude in response to the non-rotation of the rotor, as illustrated by the phantom waveform 88$_a$. This higher amplitude results from the higher energy level available for inducing the voltage waveform in the non-energized winding. The relative difference amplitude between these two conditions, i.e. rotation and non-rotation of the rotor, is predictable, such that a threshold value 90 may be established between the amplitude extremes of the two different waveforms. An induced voltage amplitude which exceeds the threshold indicates a failure of the rotor to respond to the newly energized stator windings and may be used as an indication of failure in the motor.

The stator windings energized in each of the adjacent step intervals (M, N and O for intervals 82, 83) are labled the "active" windings for those particular two adjacent step intervals, and the stator windings de-energized in both adjacent intervals are labeled the "inactive" windings. For a four phase motor there can be only one inactive winding for each adjacent pair of intervals and in adjacent intervals 82-83 winding P is the inactive winding which is monitored for the presence of the magnetic field induced voltage signal. For adjacent step intervals 92, 93 it is assumed that the windings O, P (waveforms 94, 95) are energized in preceding interval 92, and in the present interval 93 windings N, O are energized; windings N, O, P are the "active" windings and winding M (de-energized in each interval) is the "inactive" winding. The induced voltage signal in "inactive" winding M is illustrated by the waveform 98 for normal motor response and by phantom waveform $98_a$ for a non-responsive motor. Similarly in intervals 100, 101 windings M, N, P are active (M, N are energized (waveforms 102, 103) in interval 100 with windings M, P (waveforms 102, 104) being energized in the succeeding interval 101) and the induced voltage signal in inactive winding O is illustrated for normal operation by waveform 106, and for a failed motor by phantom waveform $106_a$.

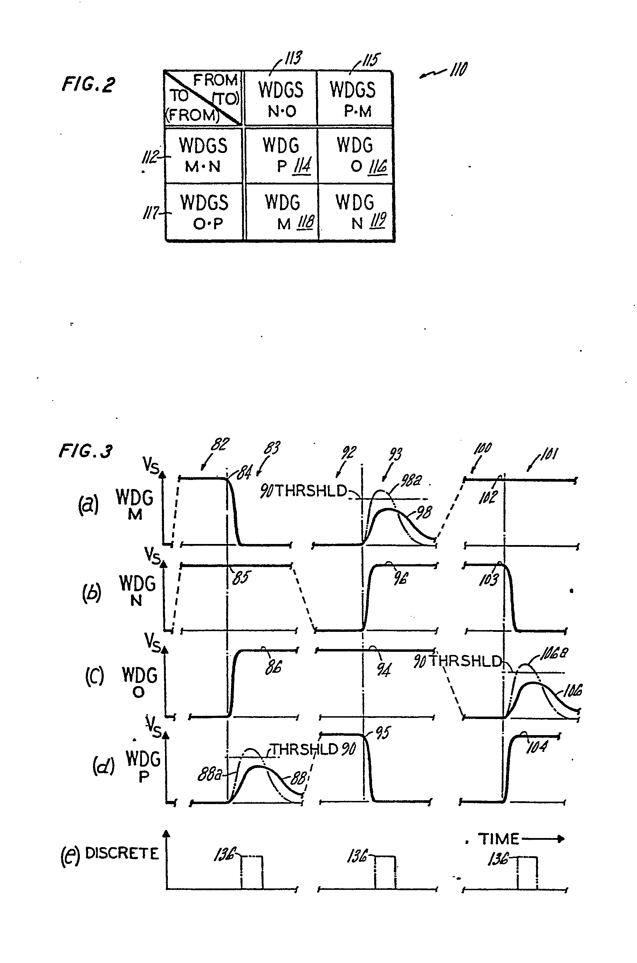

The matrix table 110 of Fig. 2 illustrates the combinations of excited stator winding pairs for adjacent step intervals. For a four phase stepper motor this table appears as a two-by-two matrix which may be used to determine the particular inactive winding to be monitored in each present step interval. Since rotation of the stepper motor requires excitation of overlapped, adjacent pairs of stator windings, the command gate signals on lines 18-21 (Fig. 1) cannot call for nonadjacent windings. To illustrate the use of the table, for the adjacent intervals 82, 83 of Fig. 3 where windings M, N are energized in interval 82 followed by the energizing of windings N, O in interval 83, the table 110 transition from windings M·N 112 to the windings N·O 114 defines winding P 114 as the inactive winding in which the induced voltage is measured. Similarly the transition from M·N 112 to P·M 115 (intervals 100, 101 in Fig. 3) the table defines the winding O 116 as the inactive winding. The two matrix columns (ordinate, abscissa) are interchangeable in determining the inactive winding, as illustrated.

Referring again to Fig. 1, the ANDED discrete signals representative of the "actual" excited stator winding pairs on lines 76-79 and the discretes indicative of the "commanded" stator pairs on lines 68-71 are presented to the inputs of AND gates 120-123 in such a manner as to implement the Fig. 2 matrix table logic. As such, AND gate 120 receives both the actual ANDED discrete $(N·O)_a$ and the commanded ANDED discrete $(O·P)_c$; these correspond to the matrix table inputs 113, 117 which indicates that for a transition from windings N, O to windings O, P that winding M is the inactive winding. This corresponds to a logic one discrete on output line 124. Similarly AND gate 122 receives the ANDED actual stator winding pair $(P \cdot M)_a$ and the ANDED commanded stator winding pair $(M \cdot N)_c$ and provides a logic one discrete on lines 126 indicative of the inactive winding O. The AND gates 121, 123 are connected in a similar manner, such that the output lines 124-127 are associated with the corresponding stator windings M, N, O and P, respectively.

The lines 124-127 are presented to the address input of a multiplexed switch (MUX) 130, of a known type, which receives the stator winding lines 9-12 presented to the motion sensor through the trunkline 62. For a multiphase stepper motor having more than four phases, the MUX 130 would have a corresponding higher number of inputs, such that each of the stator windings of the multiphase stepper motor may be switched through the MUX to the input of a threshold detect circuit 132. The threshold detect circuit is similarly of a known type and is set at the threshold value (90, Fig. 3) to provide discrimination between the induced voltage signal amplitudes indicative of normal motor and failed motor operation. The output of the threshold detect circuit is provided on the line 134 from the motion sensor 60.

In the embodiment of the motion sensor of Fig. 1 the output from the threshold detect circuit provides an indication of motor failure. In this application the sensor functions as a fault detector which provides an output discrete only in the presence of a failed motor state. Such a discrete may be used by the EEC system 6 to set alarm routines which indicate the existence of a failed stepper motor and which further enable the operator to switch to a manual mode of control. The phantom signal pulses 136 in Fig. 3 illustration (e) are associated with the phantom induced voltage waveforms 88a, 98a, and 106a, and represent the output response of the threshold detector 132 in response to the presence of an induced signal amplitude value which is greater than the threshold value (90, Fig. 3). Alternatively the discrete signal output on the line 134 may be conditioned to manifest instead, the proper response, or actual step of the motor by inverting the output from the threshold detect circuit to provide successive pulses in the presence of each confirmed step of the motor. In this sense the motion sensor then functions as an actual sensor, in that it provides a signal indicative of the actual rotation of the motor in response to each set of stator winding commands. Similarly, the alarm routines may be selected for the particular system to fit any type of desired system response to the failed motor.

In the stepper motor motion sensor of the present invention, the indication from the sensor either affirms normal operation, or manifests failed operation of the stepper motor. This indication differs from that provided through an actual position feedback signal. The discrete indication is of a present failure in the motor, which allows an early warning to the parent system of an inoperative control loop. In those control loops having an actual feedback position signal the failure of the motor may not be detected for some number of successive cycle time periods after which the lack of fuel valve response may presume a motor failure. Alternatively, in those control loops which do not have an actual feedback position but rely on the sensed conditions of the outer loop control

parameter (the turbine speed $N_H$ in the system of Fig. 1) an even higher number of cycle time periods may be required before the failure of the loop is detected. This delay in detecting stepper motor failure could cause an engine failure itself, and at a minimum detracts from the overall reliability and integrity, of the parent control system. The failure indication provided by the present motion sensor is the earliest indication possible since it occurs simultaneous with the actual command to change position. As such it gives the earliest possible warning.

In Fig. 1, the motor motion sensor is embodied in discrete hardware components which decode the successive step interval stator winding excitation signals to determine the particular inactive winding to be monitored. In an alternative embodiment the function of the motion sensor may be executed by the signal processor 28 of the EEC, such that the motion sensing function is embodied in the overall control function. Referring now to Fig. 4, in an illustration of a typical flow chart diagram of the steps provided by a signal processor in implementing the function of the stepper motor motion sensor, the processor enters the flow chart at 150 and next executes instructions 152 to determine whether there is a present command for a stepper motor cycle time calculation. If NO, the processor exits at 154. If YES the processor executes instructions 156 to determine the number of stator windings $(W_j)$ for the particular multiphase motor. Instructions 158 next command the processor to read the control loop error signal, both magnitude and polarity. For the system of Fig. 1 the error magnitude is listed as $\Delta$RPM with the polarity indication plus or minus. Instructions 160 determine the number of motor steps to be performed in the present cycle time
interval in dependence on the magnitude of the error
signal, but limited to the maximum number allowed within
the cycle time in dependence on the time interval of
the step itself, i.e. the slew rate of the motor. The
desired number (K) of steps is determined by multiplying the error signal magnitude by the scale factor of
steps-per-error signal parameter magnitude. Instructions 162 determine the maximum number (Kmax) of steps
allowed in the cycle time and decision 164 determines
whether the desired number is greater than the maximum.
If YES, instructions 166 set K=Kmax and instructions
166 reset the processor step counter to zero and register a maximum step count value K. Instructions 156
and 162 may not be required in a system where the information required by these instructions is known and
fixed.

Following this initial setup the processor executes
a subroutine (instructions 170-192) which implements
the motion sensor function provided by the present
invention. In instructions 170 the processor determines
the last pair of energized stator windings, $W_Q$, $W_{Q+1}$.
Decision 172 establishes the desired direction of
rotation of the motor by determining if the error sig-
nal polarity is positive. The flow chart of Fig. 4
assumes that a positive polarity requires clockwise
rotation of the motor, however, this assumption is
arbitrary and in any application the relationship is
determined by the particular parent control loop. If
YES, the processor sets up CW rotation of the motor by
selecting (instructions 174) the next pair of windings
to be energized, i.e. the succeeding overlapping pair
in the CW direction; listed as $W_{Q+1}$ and $W_{Q+2}$. Winding
$W_{Q+1}$ represents the common energized winding in the two adjacent, succeeding stepper motor intervals. Instructions 176 next define the inactive windings ($W_i$) as any of the total windings ($W_j$) other than those identified as associated with either of the last two succeeding stepper motor intervals. A NO answer to decision 172 indicates a desired CCW direction and results in execution of similar instructions 178, 180; instructions 178 select the next two windings in the CCW direction ($W_{Q-1}$, $W_Q$) with common winding $W_Q$, and instructions 180 identify the inactive windings.

Following instructions 176 or 180, instructions 182 select one of the identified inactive windings ($W_i$) and set a monitor for that selected winding. For the Fig. 1 four phase motor there is only one inactive winding in successive stepper motor intervals. Instructions 182 are required where the motor may have more than four stator windings; the processor may then select the one or more of the identified inactive windings which is/are most appropriate, or practical. Instructions 184 next command the energizing of the selected pair of windings (the gate signals on the output lines 18-21 from the EEC) and decision 186 determines whether the output from the monitor is greater than zero (induced voltage signal having an amplitude greater than the selected threshold) which indicates an inoperative motor. If YES, instruction 188 sets the selected alarm routines. If NO, decision 190 determines if this is the last step to be performed and if not then instructions 192 increment the step counter by one and the processor returns to instructions 170 to repeat for the next pair of windings. Following instructions 188, or a YES answer to decision 190, the processor exits the routine at 154.

The flow chart of Fig. 4 illustrates one routine suitable for implementing the stepper motor motion sensor function in the EEC processor. As may be obvious to those skilled in the programming art, any one of a number of alternative programs may be implemented which provide the same function of monitoring an inactive stator winding in each transition between adjacent step intervals to detect the presence and amplitude of the field induced voltage signal. Some of the instructions listed may be eliminated in a fixed system application where information such as the number of motor windings, or the number of maximum steps within a cycle time interval are known. Similarly, for the four phase motor of Fig. 1 instructions 176, 180 need not define all the inactive windings since only one inactive winding is available in the transition between succeeding stepper motor intervals. In any event the flow chart of Fig. 4 illustrates the principles of implementing the stepper motor motion sensor function directly in the EEC.

The stepper motor motion sensor of the present invention provides an indication of stepper motor response to the successive step commands from the motor control circuitry. It may be used in any type of stepper motor drive circuit, whether open or closed loop, while maintaining the assurance and integrity of the loop. It provides detection of motor failure at the earliest possible time, which results in the ability to quickly react to the motor failure prior to any loss of control which may degrade or damage the system or component being controlled by the parent control loop. In the case of an engine control system the ability to detect the motor failure at the earliest possible time is of tremendous value since it precludes reliance on a failed control loop which may result in severe or catastrophic failure.

The motion sensor may be implemented either in a hardware configuration as a direct add on to an existing control loop, and as such requires no modification of the servo control functions. The indication provided by motion sensor may be adapted for use in any one of a number of desired ways to establish the preferred required alarm routines. Alternatively the function of the motion sensor may be embodied directly in the EEC itself by intergrating the function within the control loop software. In either embodiment, the motion sensor is easily added to any existing system without major modification or alteration of the system itself. Similarly, although the invention has been shown and described with respect to preferred embodiments thereof, it should be understood by those skilled in the art that the foregoing and various other changes, omissions, and additions may be made therein without departing from the spirit and scope of the invention.

Claims

1. Apparatus for detecting operation of a stepper motor rotor in response to the energizing of the motor stator windings by excitation signals presented to the motor in each step interval from an excitation signal source, as characterized by:

means responsive to said excitation signal source, for providing inactive winding signals in each present step interval in response to the excitation signals presented to the motor, said inactive winding signals identifying the motor stator windings which are not energized in either the present step interval or in the immediately preceding step interval; and

voltage measuring means, responsive to each of the motor stator windings and responsive to said inactive winding signals, for providing a signal manifestation of stepper motor operation in dependence on the amplitude value of the voltage signal induced in one or more of said inactive stator windings in response to the energizing of the motor stator windings in each present step interval.

2. The apparatus of claim 1, wherein said voltage measuring means provides said signal manifestation of stepper motor operation in dependence, alternately, on the amplitude value of said induced voltage signal being greater than or less than a defined amplitude value.

3.    The apparatus of claim 2, wherein said voltage measuring means provides said signal manifestation in response to an amplitude value of said induced voltage signal which is less than said defined amplitude value, said signal manifestation being indicative of the actual movement of the stepper motor rotor in response to the excitation signals presented to the motor in said present step interval.

4.    The apparatus of claim 2, wherein said voltage measuring means provides said signal manifestation of stepper motor operation in dependence on an amplitude value of said induced voltage signal being greater than said defined amplitude value, said signal manifestation being indicative of the non-rotation of the stepper motor rotor in response to the excitation signals presented to the motor in said present step interval.

5.    The apparatus of claim 1, wherein said means responsive to said excitation signal source, comprises:
        first means, for providing active winding signals in response to the excitation signals presented to the motor in each present step interval, said active winding signals identifying the motor stator windings to be energized in the present step interval together with the stator windings which have been energized in the immediately preceding step interval; and
        second means, responsive to said first means, for providing said inactive winding signals in the presence of each of said active winding signals, said inactive winding signals identifying the stator windings not energized in either the immediately preceding interval or in the present step interval.

6. The apparatus of claims 1 or 5, wherein said voltage measuring means monitors the one or more of said inactive windings identified in each present step interval for a time coincident with that time associated with a peak amplitude value of the induced voltage signal.

7. Apparatus for detecting operability of a four phase stepper motor having four stator windings, in response to the energizing of successive pairs of stator windings in successive step intervals by excitation signals presented to the motor from a source of excitation signals, each pair of stator windings energized in each present step interval including one of the pair of stator windings energized in an immediately preceding step interval, as characterized by:

means responsive to the excitation signal source for providing, in each present step interval in response to the excitation signals presented to the motor, an inactive winding signal identifying the stator winding which is not energized in either the present step interval or in the immediately preceding step interval; and

voltage measuring means, responsive to the four motor stator windings and responsive to said inactive winding signal, for monitoring, in each present step interval the inactive stator winding identified therein by said inactive winding signal, and for providing a signal manifestation of stepper motor operation in dependence on the amplitude value of the voltage signal induced in said monitored inactive winding in response to the energizing of the selected pair of motor stator windings by the excitation signals presented in said present step interval.

8.   The apparatus of claim 7, wherein said voltage measuring means provides said signal manifestation as an indication of the actual rotation of the stepper motor rotor in response to the excitation signals presented in each present step interval, in dependence on an amplitude value for the induced voltage signal in said identified inactive stator winding which is less than that of a defined amplitude value.

9.   The apparatus of claim 7, wherein said voltage measuring means provides said signal manifestation as an indication of the non-rotation of the stepper motor rotor in response to the excitation signals presented in each present step interval, in dependence on an amplitude value for the induced voltage signal in said identified inactive stator winding which is greater than that of a defined amplitude value.

10.   A method for detecting the operation of a stepper motor rotor in response to the energizing of the motor stator windings by excitation signals presented to the motor in each step interval from an excitation signal source, as characterized by:

identifying, in each present step interval, a set of inactive stator windings as being those motor stator windings which are not energized in either the present step interval or in the immediately preceding step interval; and

providing a signal manifestation of stepper motor operation in dependence on the amplitude value of the voltage signal induced in one or more of said inactive stator windings identified in each present step interval in response to the energizing of the other motor stator windings in said present step interval.

11.   The method of claim 10, wherein the step of providing comprises the steps of:

monitoring, in each present step interval, at least one of said inactive stator windings identified therein, and measuring the amplitude value of said induced voltage signal;

comparing the measured amplitude value in each present step interval with that of a defined amplitude value; and

determining the operation of the stepper motor in dependence on the relative value of said measured amplitude value with respect to said defined amplitude value, and providing said signal manifestation in representation of said determination.

12.   The method of claim 11, wherein said step of determining includes providing said signal manifestation in response to the presence, in a present step interval, of a measured amplitude value less than that of said defined amplitude value, said signal manifestation being indicative of the actual rotation of the stepper motor rotor in said present step interval.

13.   The method of claim 11, wherein said step of determining includes providing said signal manifestation in response to the presence, in each present step interval, of a measured amplitude value greater than that of said defined amplitude value, said signal manifestation being indicative of the non-rotation of the stepper motor rotor in said present step interval.

FIG.1

0046722

FIG.2

| TO (FROM) / FROM (TO) | WDGS N·O *113* | WDGS P·M *115* |
|---|---|---|
| *112* WDGS M·N | WDG P *114* | WDG O *116* |
| *117* WDGS O·P | WDG M *118* | WDG N *119* |

*110*

FIG.3

(a) WDG M

(b) WDG N

(c) WDG O

(d) WDG P

(e) DISCRETE

90 THRSHLD

THRSHLD 90

90 THRSHLD

TIME

FIG. 4

```
                    ( ENTER )──150
                        │
                        ▼
                    ╱ STEPPER ╲────152
                   ╱  MTR CYCLE ╲  N ───────────────────────┐
                   ╲    TIME    ╱                            │
                    ╲────────╱                               │
                        │ Y                                  │
                        ▼                                    │
        ┌───────────────────────────────────────────┐       │
        │ DETERMINE NUMBER OF MOTOR WINDING W_j ──156│       │
        ├───────────────────────────────────────────┤       │
        │ READ ERROR SIGNAL MAGNITUDE ΔRPM AND ──158 │       │
        │        POLARITY ΔRPM=±                      │       │
        ├───────────────────────────────────────────┤       │
        │ DETERMINE NUMBER OF MOTOR STEPS K=STEPS/RPM·ΔRPM ─160│      │
        ├───────────────────────────────────────────┤       │
        │ DETERMINE MAXIMUM NUMBER OF STEPS          │       │
        │ PERMITTED PER CYCLE TIME PERIOD K_MAX ──162│       │
        └───────────────────────────────────────────┘       │
                        │                                    │
                        ▼                                    │
                    ╱─────────╲  164                         │
            ┌──── N ╱ K>K_MAX  ╲ Y ──────────┐              │
            │       ╲─────────╱               ▼              │
            │                          ┌──────────────┐──166 │
            │                          │ SET K=K_MAX  │      │
            │                          └──────────────┘      │
            │                                 │              │
            └────────────┬────────────────────┘              │
                         ▼                                   │
        ┌────────────────────────────────────────────┐      │
        │ RESET STEP COUNTER S=0 AND SET MAX STEPS S=K │──168│
        └────────────────────────────────────────────┘      │
                         ▼                                   │
        ┌────────────────────────────────────────────┐      │
        │ DETERMINE LAST PAIR OF ENERGIZED WDGS W_Q, W_Q+1 │──170│
        └────────────────────────────────────────────┘      │
                         │                                   │
                    N  ╱────────╲  Y                         │
        ┌────────────╱ ΔRPM=±    ╲──────────┐                │
        │            ╲──────────╱ 172       │                │
        ▼                                   ▼                │
┌──────────────────┐              ┌──────────────────┐       │
│ SELECT NEXT PAIR │              │ SELECT NEXT PAIR │       │
│   W_Q-1, W_Q  ──178│            │   W_Q+1, W_Q+2  ──174│    │
├──────────────────┤              ├──────────────────┤       │
│ DEFINE INACTIVE WDGS│           │ DEFINE INACTIVE WDGS│    │
│      R=Q-1       │              │      R=Q+2       │       │
│ Wi=Wj-Σ W_R  ──180│         176─│ Wi=Wj-Σ W_R      │       │
│      R=Q+1       │              │      R=Q         │       │
└──────────────────┘              └──────────────────┘       │
        │                                   │                │
        └─────────────┬─────────────────────┘                │
                      ▼                                      │
        ┌────────────────────────────────────────────┐      │
        │ SELECT Wi AND SET MONITOR=Wi ──182          │      │
        ├────────────────────────────────────────────┤      │
        │ ENERGIZE SELECTED NEXT PAIR OF WDGS ──184   │      │
        └────────────────────────────────────────────┘      │
                      │                                      │
    ┌──────┐   N  ╱──╲ 190   N  ╱──────────╲ 186  Y          │
    │ SET  │◄─────╱S=K╲◄────────╱ MONITOR>0 ╲──────┐         │
    │S=S+1 │      ╲──╱          ╲──────────╱       ▼         │
    └──────┘192    │                         ┌──────────┐──188│
        │          │                         │SET ALARM │     │
        │          │                         │ROUTINES  │     │
        │          │                         └──────────┘     │
        │          │                              │           │
        └──────────┴──────────────────────────────┴───────────┘
                                  │
                                  ▼──154
                              ( EXIT )
```